**Europäisches Patentamt**

**European Patent Office**

**Office européen des brevets**

(11) Veröffentlichungsnummer: **0 024 054**
**A1**

(12) **EUROPÄISCHE PATENTANMELDUNG**

(21) Anmeldenummer: **80104791.1**

(22) Anmeldetag: **13.08.80**

(51) Int. Cl.³: **C 21 B 5/00**
**B 65 G 53/06, C 21 C 7/00**

(30) Priorität: **14.08.79 DE 2932867**

(43) Veröffentlichungstag der Anmeldung:
**18.02.81 Patentblatt 81/7**

(84) Benannte Vertragsstaaten:
**AT BE DE FR GB IT LU NL SE**

(71) Anmelder: **Eisenwerk-Gesellschaft Maximilianshütte mbH**

**D-8458 Sulzbach-Rosenberg(DE)**

(72) Erfinder: **Fassbinder, Hans-Georg, Dr.-Ing.**
**Schelmesgraben 20a**
**D-8458 Sulzbach-Rosenberg(DE)**

(74) Vertreter: **Dres. Kador & Klunker**
**Knöbelstrasse 36**
**D-8000 München 22(DE)**

(54) Verfahren und Vorrichtung zur pneumatischen Förderung von feinkörnigen Feststoffen.

(57) Es wird ein Verfahren und eine Vorrichtung zur pneumatischen Förderung von feinkörnigen Festoffen über ein Druckgefäß (1) zu unter erhöhtem Druck stehenden Verbrauchsstellen, insbesondere in eine Metallschmelze, beschrieben, wobei die Feststoffe unter Druck in das Druckgefäß (1) gefördert werden, der Druck im Druckgefäß stets über jenem der Verbrauchsstellen gehalten wird, und die Feststoffe vom Druckgefäß unabhängig voneinander zwei oder mehr Verbrauchsstellen zugeführt werden.

./...

Croydon Printing Company Ltd.

# Beschreibung

Die Erfindung bezieht sich auf ein Verfahren und eine Vorrichtung zur pneumatischen Förderung von feinkörnigen Feststoffen und insbesondere auf ein Verfahren zur pneumatischen Förderung von feinkörnigen Feststoffen über ein Druckgefäß zu unter erhöhtem Druck stehenden Verbrauchsstellen, wie insbesondere in eine Metallschmelze.

Es sind Verfahren und Vorrichtungen bekannt, um pneumatisch förderbare Stoffe Verbrauchsstellen zuzuführen, die unter einem erhöhten Druck stehen.

In einem Stahlwerk werden beispielsweise Legierungsmittel und Schlackenbildner über Lanzen und Düsen unterhalb der Badoberfläche der Eisenschmelze zugeführt. Bei der Stahlerzeugung im Sauerstoffdurchblaskonverter lädt man z. B. den gesamten Kalk zur Schlackenbildung dem Sauerstoff auf und führt ihn auf diese Weise über die Düsen im Konverterboden der flüssigen Schmelze zu. Nach dem gleichen Prinzip werden auch über einzelne Bodendüsen im Sauerstoffdurchblaskonverter feinkörniges Erz zur Kühlung und Kohlenstoff enthaltende Brennstoffe zur Erhöhung des Wärmeangebots in die Schmelze eingeleitet.

Die feinteiligen Feststoffe weisen unterschiedliche Körnungen auf. Zum Beispiel liegt der Staubkalk in einer handelsüblichen Körnung von unter 0,1 mm vor, während Koksgrus ein Maximalkorn bis etwa 5 mm aufweist.

Während als Fördergas für die Schlackenbildner und das Erz häufig der Frischsauerstoff benutzt wird, führt man die Brennstoffe der Schmelze bevorzugt mit sauerstofffreien Gasen zu, wie beispielsweise Stickstoff, Argon, Erdgas, Kohlenmonoxid und Mischungen davon.

Die bekannte Arbeitsweise für den pneumatischen Transport der Feststoffe in die Schmelze, also an eine unter Druck stehende Verbrauchsstelle, besteht darin, aus einem Druckgefäß die Feststoffe chargenweise abzuziehen. Dieses Druckgefäß ist so bemessen, daß es die Verbrauchsmenge körniger Feststoffe für eine bis zwei Chargen aufnehmen kann, und es wird mit dem Fördergas auf einen Druck gebracht, der höher liegt als der Druck an der Verbrauchsstelle.

Über dem Druckgefäß befindet sich normalerweise ein Lagertank, der ungefähr den Bedarf an Feststoffen für zwei bis fünf Chargen aufnimmt. Dieser Lagertank steht nicht unter Druck und wird auf üblichem Wege pneumatisch von einem großen Vorratsgefäß mit Feststoffen versorgt. Nach jeder Charge wird aus diesem Lagertank das Druckgefäß mit Fördergut versorgt. Dazu entspannt man das Druckgefäß und öffnet ein Absperrorgan, damit die Feststoffe aus dem Lagertank in das Druckgefäß fließen. Nach diesem Füllvorgang setzt man das Druckgefäß mit Fördergas unter den erforderlichen Betriebsdruck. Aus dem Druckgefäß werden die Feststoffe über ein Dosierventil der Verbrauchsstelle mit beliebigen Dosierraten kontinuierlich oder portionsweise zugeführt. Diese Arbeitsweise ist betriebssicher und heute üblich.

Der Nachteil dieser bekannten Methode besteht darin, daß für jede Verbrauchsstelle ein getrenntes Druckgefäß mit Lagertank bereitgestellt werden muß. Beispielsweise baut man für die Versorgung mit Staubkalk als Schlackenbildner in einem Stahlwerk mit drei Konvertern für jeden Konverter ein Druckgefäß mit Lagertank. Für jedes weitere Fördergut, zum Beispiel Kühlmittel oder Brennstoffe, ist derselbe Aufwand erforderlich.

Bei den bekannten Vorrichtungen besteht ferner der Nachteil, daß der Verbrauchsstelle nicht beliebige Mengen an Feststoffen zugeführt werden können. Das Druckgefäß ist in seiner Kapazität beschränkt. Zum Auffüllen des Druckgefäßes muß dieses entspannt und damit die Förderung zur Verbrauchsstelle unterbrochen werden.

Der Erfindung liegt die Aufgabe zugrunde, ein Verfahren und eine Vorrichtung zur pneumatischen Förderung von feinkörnigen Feststoffen zu unter erhöhtem Druck stehenden Verbrauchsstellen zu schaffen, das sich durch einfachere Verfahrensführung auszeichnet und wobei eine betriebssichere kontinuierliche oder diskontinuierliche Versorgung der Verbrauchsstelle mit Feststoffen in unterschiedlichen Mengen sichergestellt ist.

Gemäß der Erfindung wird diese Aufgabe dadurch gelöst, daß die Feststoffe unter Druck in das Druckgefäß gefördert werden, der Druck im Druckgefäß stets über jenem der Verbrauchsstellen gehalten wird, und die Feststoffe vom Druckgefäß unabhängig voneinander zwei oder mehr Verbrauchsstellen zugeführt werden.

Das erfindungsgemäße Verfahren weist gegenüber der bekannten Arbeitsweise zum Transport pneumatisch förderbarer Feststoffe an Verbrauchsstellen, die unter Druck stehen, erhebliche wirtschaftliche Vorteile auf. Es ist gemäß der Erfindung nur noch ein Druckgefäß erforderlich, um mehrere Verbrauchsstellen unabhängig voneinander mit beliebigen Durchflußraten von pneumatisch förderbaren Gütern zu versorgen.

Das Druckgefäß hat ein frei wählbares Volumen und steht ständig, insbesondere auch während des Füllvorgangs, unter Betriebsdruck.

Dadurch wird erreicht, daß den Verbrauchsstellen kontinuierlich oder diskontinuierlich beliebige Mengen zugeführt werden können. Da das Druckgefäß nicht entspannt wird, kann die Zuführung der Feststoffe zu den Verbrauchsstellen ständig aufrechterhalten werden.

Durch die Verwendung eines Druckgefäßes, das ständig unter Druck gehalten wird, ist es erstmals möglich, mehrere Verbrauchsstellen, wie Konverter, von einem einzigen Druckgefäß zu beschicken. Im Druckgefäß wird immer eine ausreichende Feststoffmenge aufrechterhalten. Der Füllvorgang erfolgt unabhängig von der Förderung aus dem Druckgefäß und kann gleichzeitig vorgenommen werden. Die Füllung kann über Füllstandsregler automatisch erfolgen.

Der Betriebsdruck im Druckgefäß liegt vorzugsweise mindestens um o,5 bar über dem Druck an der Verbrauchsstelle. Der praktisch verwendete Druck hängt ab vom absoluten Druck, von der Förderrate und vom Druckabfall zwischen Druckgefäß und Verbrauchsstelle. An der Verbrauchsstelle werden meist Drücke zwischen 3 und 12 bar, insbesondere 6 bis 1o bar, angewandt. Der Druck im Druckgefäß liegt dann vorzugsweise um o,5 bis 5 bar, vorzugsweise etwa 3 bar, über jenem der Verbrauchsstelle.

Um Fördergas, beispielsweise teures Argon, zu sparen, werden oftmals höhere Beladungen gewählt und damit höhere Drücke erforderlich.

Als Fördermedium eignen sich die verschiedensten Fördergase. Beispielsweise bewährt es sich, beim Transport von Schlackenbildnern den Frischsauerstoff als Fördermedium zu benutzen.

Beim Transport von Brennstoffen, beispielsweise Koks und Kohlenmehl, hat sich die Anwendung von sauerstofffreien Fördergasen, wie Stickstoff, Argon, Erdgas, Kohlenmonoxid und Mischungen dieser Gase bewährt.

Feststoffe zur Kühlung einer Eisenschmelze, z. B. Kalkstein und Erz, fördert man bevorzugt mit dem Frischsauerstoff oder den genannten sauerstofffreien Gasen.

An der Verbrauchsstelle für das Fördergut, z. B. den Düsen unterhalb der Badoberfläche in einem Konverter zur Erzeugung von Stahl, wird ein solcher Druck eingestellt, üblicherweise mindestens ein Druck von 3 bar, daß das Eindringen von Schmelze in die Düsen bei jedem Betriebszustand sicher verhindert wird.

In dem Druckgefäß herrscht dann mindestens ein Betriebsdruck von 3,5 bar, jedoch ist der Druck normalerweise höher. Grundsätzlich bestehen bei dem erfindungsgemäßen Verfahren keine Druckbegrenzungen. In der Praxis wird der Maximaldruck durch den Druck des Fördergases bestimmt, z. B. beträgt der Sauerstoffdruck in den üblichen Betriebsversorgungsleitungen etwa 16 bar. Andere Fördergase, beispielsweise Stickstoff, Argon und Erdgas, weisen oft höhere Betriebsdrück bis 20 bar auf.

Das erfindungsgemäße Verfahren eignet sich zur Förderung der verschiedensten feinkörnigen Feststoffe verschiedenster Korngröße. Insbesondere eignet es sich zur Förderung von Staubkalk, der üblicherweise eine Korngröße unter 0,1 mm aufweist, von Koksgrus, der ein Maximalkorn von etwa 5 mm aufweist, von Kohlestaub, von Erzen und verschiedenen Schlackenbildnern, Flußmittel und Zusätzen in Metallschmelzen.

Das erfindungsgemäße Verfahren erlaubt es mehreren Verbrauchsstellen, den gleichen Feststoff, unabhängig voneinander und grundsätzlich zu jedem beliebigen Zeitpunkt, zuzuführen. Diese vorteilhafte Betriebsweise wird möglich, da das Druckgefäß während des Füllvorgangs mit den Feststoffen nicht mehr entspannt wird.

Die Feststoffe werden dem Druckgefäß vorzugsweise über ein mit Druck beaufschlagbares Schleusengefäß oder eine gleichwirkende mit Druck beaufschlagbare Vorrichtung, wie eine Druckförderschnecke, die hier allgemein als Schleusengefäß bezeichnet wird, zugeführt.

In das Schleusengefäß gelangen die Feststoffe mit einer üblichen pneumatischen Förderung, entweder aus einem größeren Vorratsbunker oder direkt aus den üblichen Silo-Transportfahrzeugen.

Nach erfolgter Füllung des Schleusengefäßes wird dieses Gefäß unter den Betriebsdruck des Druckgefäßes gesetzt, und das Fördergut bei Druckausgleich durch Öffnen einer üblichen Absperrvorrichtung in das Druckgefäß eingeführt. Dieser Füllvorgang des Druckgefäßes mit den Feststoffen aus dem Schleusengefäß erfolgt vollkommen unabhängig von der Entnahme von Feststoffen aus dem Druckgefäß. Der Füllvorgang des Druckgefäßes kann von üblichen Füllstandsanzeigern im Druckgefäß gesteuert werden.

Das erfindungsgemäße Verfahren weist gegenüber der bekannten Arbeitsweise, neben der Einsparung von Druckgefäßen und Vorratstanks bei zwei oder mehr Verbrauchsstellen für pneumatisches Fördergut, noch weitere Vorteile auf. Die Abnahme von Fördergut aus dem Druckgefäß wird nicht durch den Füllvorgang beeinträchtigt. Der Aufwand von Absperrorganen, z. B. zwischen Druckgefäß und Vorratstank, verringert sich. Die Leitungsführung für das Rohrsystem zum Transport der feinteiligen Feststoffe vereinfacht sich ebenfalls. Die Versogung mit Fördergas und Feststoffen ist gleichfalls einfacher.

In die Transportleitung zwischen Auslaß am Druckgefäß und der Verbrauchsstelle kann ein Durchflußregelventil und eine Durchflußmeßeinrichtung eingebaut werden. Damit läßt sich, unabhängig von der Anzahl der Verbrauchsstellen und ihrer Betriebsweise, die Durchflußrate für die feinteiligen Feststoffe regeln. Es können Feststoffe kontinuierlich oder diskontinuierlich zu jedem beliebigen Zeitpunkt und über eine frei wählbare Zeitspanne entnommen werden. Die Durchflußraten können auch variiert werden.

Die Größe des Druckgefäßes ist in weiten Grenzen variierbar und den Fördermengen angepaßt. Das Schleusengefäß hat im Vergleich zum Druckgefäß verhältnismäßig kleines Volumen, etwa im Verhältnis 1 : 5 bis 1 : 2o.

Das Schleusengefäß weist eine Zufuhrleitung für die feinteiligen Feststoffe, eine Zufuhrleitung für das Fördermedium und eine Entspannungsleitung auf. Es ist über eine Verbindungsleitung mit einem Absperrorgan mit dem Druckge-

- 10 -

fäß verbunden. Letzteres weist zwei oder mehrere Auslaßleitungen auf. Die Auslaßleitungen sind mit Durchflußmeßeinrichtungen und Durchflußregeleinrichtungen versehen.

Bei Anwendung des erfindungsgemäßen Verfahrens, z. B. in
einem Stahlwerk mit drei Konvertern, ist für die Versorgung dieser Konverter mit einer Sorte feinteiliger Feststoffe nur noch ein Druckgefäß erforderlich. Als grober
Richtwert beziffern sich die Investitionssummen nach dem
heutigen Stand für Versorgungseinrichtungen mit einem
Feststoff bei der bekannten Methode auf etwa 5 Mio DM
und gemäß dem erfindungsgemäßen Verfahren auf etwa 2 Mio
DM.

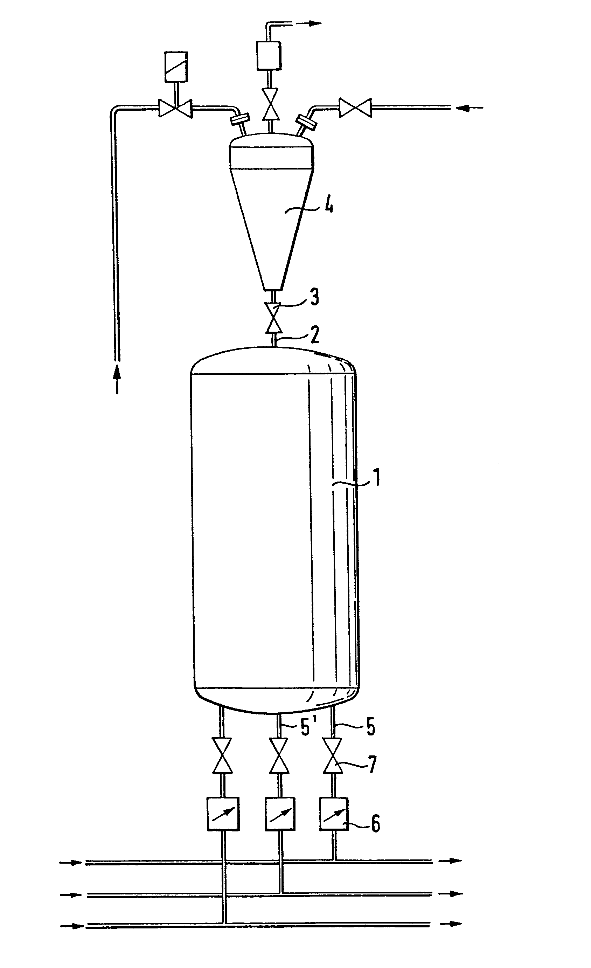

Das erfindungsgemäße Verfahren wird nachstehend anhand
der Zeichnung näher erläutert. Die gezeigte Vorrichtung
stellt nur ein Ausführungsbeispiel dar, und sie läßt sich
in vielfältiger Weise im Sinne der Erfindung abwandeln.

Für die Versorgung von drei 6o t-Konvertern in einem
Stahlwerk mit etwa 1 Mio Tonnen Jahreskapazität mit Koks
bzw. Kohlestaub in einer Menge von etwa 1 bis 5 t pro
Charge, benötigt man ein Druckgefäß mit einem inneren Volumen von etwa 15 $m^3$.

Das Druckgefäß 1 ist über eine Verbindungsleitung 2 mit
eingebautem Absperr- und Dichtorgan 3 mit dem Schleusengefäß 4 verbunden. Über das Schleusengefäß 4 wird im
Druckgefäß 1, unabhängig von der Fördergutentnahme, ein
festgelegter Füllstand aufrechterhalten.

Durch die Auslaßleitungen 5, 5', 5" entnimmt man, unabhängig voneinander, Fördergut für die nicht dargestellten Verbrauchsstellen. In der Transportleitung zwischen
den Auslaßleitungen 5, 5', 5" und der Verbrauchsstelle
sind in jeder Leitung eine Durchflußmeßeinrichtung 6 und
ein Durchflußregelventil 7 eingebaut.

In diesem Beispiel beträgt der Druck an der Verbrauchsstelle, nämlich den Bodendüsen in einem Sauerstoffdurchblaskonverter, 1o bar und der Druck im Druckgefäß 13 bar.

Das erfindungsgemäße Verfahren und die Vorrichtung haben
sich beim Einsatz im Stahlwerk und bei dem dort üblichen
Chargenbetrieb mit relativ kurzen Taktzeiten von etwa 15
Minuten über eine lange Einsatzzeit als betriebssicher
und wenig störanfällig erwiesen.

K 12978

Eisenwerk-Gesellschaft
Maximilianshütte mbH
8458 Sulzbach-Rosenberg

Verfahren und Vorrichtung zur pneumatischen Förderung
von feinkörnigen Feststoffen

P a t e n t a n s p r ü c h e

1. Verfahren zur pneumatischen Förderung von feinkörnigen Feststoffen über ein Druckgefäß zu unter erhöhtem Druck stehenden Verbrauchsstellen, insbesondere in eine Metallschmelze, dadurch g e k e n n z e i c h n e t, daß die Feststoffe unter Druck in das Druckgefäß gefördert werden, der Druck im Druckgefäß stets über jenem der Verbrauchsstellen gehalten wird, und die Feststoffe vom Druckgefäß unabhängig voneinander zwei oder mehr Verbrauchsstellen zugeführt werden.

2. Verfahren nach Anspruch 1 dadurch g e k e n n z e i c h - n e t, daß die Feststoffe in ein Schleusengefäß gefördert werden, das Schleusengefäß auf gleichen Druck wie das nachgeschaltete Druckgefäß gebracht und die Feststoffe in das Druckgefäß gefördert werden, der Druck im Druckgefäß stets über jenem der Verbrauchsstellen gehal-

- 2 -

ten wird, und die Feststoffe vom Druckgefäß unabhängig voneinander zwei oder mehr Verbrauchsstellen zugeführt werden.

3. Verfahren nach Anspruch 1 oder 2, dadurch g e k e n n - z e i c h n e t, daß der Druck im Druckgefäß mindestens auf 0,5 bar über jenem der Verbrauchsstelle eingestellt wird.

4. Vorrichtung zur pneumatischen Förderungen von fein- körnigen Feststoffen, dadurch g e k e n n z e i c h - n e t, daß sie ein Schleusengefäß (4) mit einer Zufuhrleitung für feinkörnige Feststoffe, einer Zufuhrleitung für das Fördermedium und einer Entspannungsleitung und ein damit über eine Verbindungsleitung (2) mit Absperrorgan (3) verbundenes Druckgefäß (1) umfaßt, das mindestens zwei Auslaßleitungen (5,5') aufweist.

5. Vorrichtung nach Anspruch 4, dadurch g e k e n n - z e i c h n e t, daß in den Auslaßleitungen (5) Durchflußmeßeinrichtungen (6) und Durchflußregeleinrichtungen (7) vorgesehen sind.

0024054

Europäisches Patentamt

**EUROPÄISCHER RECHERCHENBERICHT**

Nummer der Anmeldung

EP 80 10 4791

| | EINSCHLÄGIGE DOKUMENTE | | | KLASSIFIKATION DER ANMELDUNG (Int Cl ) |
|---|---|---|---|---|
| Kategorie | Kennzeichnung des Dokuments mit Angabe, soweit erforderlich, der maßgeblichen Teile | | betrifft Anspruch | |
| X | DE - A - 1 473 098 (I.R.S.I.D.)<br>* Figuren; Ansprüche 1,2 *<br><br>-- | | 1-4 | C 21 B 5/00<br>B 65 G 53/06<br>C 21 C 7/00 |
| X | FR - A - 1 345 088 (I.R.S.I.D.)<br>* Figuren 1,2; Anspruche 1,2 *<br><br>-- | | 1-4 | |
| X | DE - A - 2 714 355 (A. KLEIN)<br>* Figur 1; Seiten 13-15 *<br><br>-- | | 1-5 | |
| | ENGINEERING, Band 194, Nr. 5043,<br>14. Dezember 1962, Seite 788<br>London, G.B.<br>" "Fluid Coal" Injected Into<br>Blast Furnace"<br>* Seite 788, diagram, rechte<br>Spalte *<br><br>-- | | | |
| | DE - A - 1 642 954 (BLACKSTONE)<br>* Figuren 1-3; Ansprüche 1-7 *<br><br>-- | | 1-5 | |
| | DE - A - 2 218 355 (STURTEVANT EN-<br>GINEERING)<br>* Figur 1; Ansprüche 1-6 *<br><br>-- | | 1-5 | |
| P | LU - A - 81 581 (PAUL WURTH)<br>* Figur 1; Anspruche 1-5 *<br><br>--<br><br>./. | | 1-4 | |

**RECHERCHIERTE SACHGEBIETE (Int Cl.)**

C 21 B 5/00
B 65 G 53/22
C 21 C 7/00
B 65 G 53/66
          53/06
F 23 K 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-11-1980 | ELSEN |

EPA form 1503 1 06.78

0024054

Europäisches
Patentamt

EUROPÄISCHER RECHERCHENBERICHT

Nummer der Anmeldung

EP 80 10 4791

-2-

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgebliche Teile | betrifft Anspruch | |
| P | <u>LU - A - 81 388</u> (PAUL WURTH)<br>* Figur 1; Ansprüche 1,11; Seite 5, Absatz 1 *<br><br>---- | 1-4 | |
| | | | **RECHERCHIERTE SACHGEBIETE (Int Cl.³)** |